# EUROPEAN PATENT SPECIFICATION

(11) **EP 3 588 993 B1**
(45) Date of publication and mention of the grant of the patent: **07.10.2020**
(21) Application number: 18764488.5
(22) Date of filing: 09.03.2018
(51) Int. Cl.: H04W 4/06, H04W 28/02, H04L 12/801, H04L 12/851

(54) **BROADCAST SENDING METHOD AND TERMINAL**
RUNDFUNKSENDEVERFAHREN UND ENDGERÄT
PROCÉDÉ D'ENVOI DE DIFFUSION ET TERMINAL

(30) Priority: 10.03.2017 CN 201710142289
(43) Date of publication of application: 01.01.2020
(73) Proprietor: GUANGDONG OPPO MOBILE TELECOMMUNICATIONS CORP., LTD., Wusha, Chang'an Dongguan, Guangdong 523860 (CN)
(72) Inventor: FU, Liangjing, Dongguan Guangdong 523860 (CN); PEI, Runsheng, Dongguan Guangdong 523860 (CN); LIN, Zhiyong, Dongguan Guangdong 523860 (CN); WU, Ruyu, Dongguan Guangdong 523860 (CN); ZHANG, Jun, Dongguan Guangdong 523860 (CN)
(74) Representative: Manitz Finsterwald Patent- und Rechtsanwaltspartnerschaft mbB
(86) International application number: PCT/CN2018/078622
(87) International publication number: WO 2018/161966

(56) References cited:
- WO-A1-2011/061003
- WO-A2-2005/022344
- CN-A- 1 674 688
- CN-A- 102 118 298
- CN-A- 106 851 593
- IGOR KALKOV ET AL: "Predictable Broadcasting of Parallel Intents in Real-Time Android", JAVA TECHNOLOGIES FOR REAL-TIME AND EMBEDDED SYSTEMS, ACM, 2 PENN PLAZA, SUITE 701 NEW YORK NY 10121-0701 USA, 13 October 2014 (2014-10-13), pages 57-66, XP058059159, DOI: 10.1145/2661020.2661023 ISBN: 978-1-4503-2813-5

## Description

### TECHNICAL FIELD

The present disclosure relates to the technical field of terminals, for example, relates to a broadcast transmission method and a terminal.

### BACKGROUND

In an Android system, there are many different modules. In order to perform information transmission quickly in different modules, an Android system provides a communication manner, which is similar to the broadcasting mode in the real life. When there is a message which is to notify different modules, the message is transmitted to different broadcast receivers by the broadcasting manner.

Wherein, when distributing broadcast messages, various types of broadcast messages are all queued in a broadcast queue to be processed. When the transmitted broadcast messages are many, the broadcast queue will be a long queue; if the broadcast distribution speed is less than the speed of broadcast entering the queue, a serious blocking problem will be caused, thereby resulting in unsmooth information transmission and causing abnormal terminal operation.

A reference document D1 (IGOR KALKOV ET AL: "Predictable Broadcasting of Parallel Intents in Real-time Android", JAVA TECHNOLOGIES FOR REAL-TIME AND EMBEDDED SYSTEMS, ACM, 2 PENN PLAZA, SUITE 701 NEW YORK NY 10121-0701 USA, 13 October 2014, pages 57-66, XP058059159, DOI: 10.1145/2661020.2661023 ISBN: 978-1-4503-2813-5) discloses the following relating art: Several approaches to extend the original Android implementation with real-time capabilities were present in the last few years. Most of the research was limited to fundamental issues like real-time scheduling and non-blocking memory management. This paper demonstrates the weak predictability of Android's intra- and inter-process communication and presents a concept to improve its soft real-time capability. The proposed approach introduces a priority-based broadcast handling, instead of the original first in-first out processing.

A reference document D2 (WO2005/022344A2) relates to methods and systems for the broadcast and reception of targeted content. Using the systems and methods, a wide variety of different types of content can be targeted to a single client or a group of clients. The methods and systems utilize application handlers to handle different types of content. Further, the system can distribute packets with different rates depending on their priority.

### SUMMARY OF THE DISCLOSURE

It is an object of the invention to provide a broadcast transmission method and terminal with which the above mentioned obstacles can be overcome. This object is solved by the subject-matter of the independent claims.

In a first aspect, an embodiment of the present disclosure provides a broadcast transmission method for broadcast communication in a wireless terminal, comprising: creating a plurality of broadcast transmission queues corresponding to a plurality of types of broadcast messages; detecting a type of a received broadcast message; and transferring the received broadcast message into one of the plurality of broadcast transmission queues corresponding to the type of the broadcast message, transmitting the broadcast message in said one broadcast transmission queue, in parallel to the other queues of the plurality of broadcast transmission queues, to a broadcast receiver; detecting identification information of the plurality of broadcast messages; determining transmitters of the plurality of broadcast messages according to the identification information; and adjusting sequences of the plurality of broadcast messages in the plurality of broadcast transmission queues according to set grades of the transmitters of the plurality of broadcast messages; wherein, the transmitters of the plurality of broadcast messages include system settings, system built-in applications, and third party applications, and grades of the system settings are higher than grades of the system built-in applications.

In a second aspect, an embodiment of the present disclosure provides a terminal, which comprises a storage, a processor, and a computer program which is stored in the storage and can be executed in the processor; when executing the computer program, the processor implements the following steps: creating a plurality of broadcast transmission queues corresponding to a plurality of types of broadcast messages; detecting a type of a received broadcast message; and transferring the received broadcast message into one of the plurality of broadcast transmission queues corresponding to the type of the broadcast message, transmitting the broadcast message in said one broadcast transmission queue, in parallel to the other queues of the plurality of broadcast transmission queues, to a broadcast receiver; detecting identification information of the plurality of broadcast messages; determining transmitters of the plurality of broadcast messages according to the identification information; and adjusting sequences of the plurality of broadcast messages in the plurality of broadcast transmission queues according to set grades of the transmitters of the plurality of broadcast messages; wherein, the transmitters of the plurality of broadcast messages include system settings, system built-in applications, and third party applications, and grades of the system settings are higher than grades of the system built-in applications.

In the technical schemes provided by the embodiments of the present disclosure, by transferring a received broadcast message into a broadcast transmission queue corresponding to a type of the broadcast message, and thereby transmitting the broadcast message in parallel to a broadcast receiver, the speed of distribution of the broadcast message can be improved, and the blocking problem caused by broadcast can be solved.

After reading and understanding the drawings and the detailed description, other aspects can be understood.

### BRIEF DESCRIPTION OF THE DRAWINGS

The drawings explained here are used to provide further appreciation for the present disclosure, and form a part of the present disclosure. The exemplary embodiments and their explanation of the present disclosure are intended to illustrate the present disclosure and do not form improper restriction of the present disclosure.
FIG. 1a is a flow chart of a broadcast transmission method provided by one embodiment of the present disclosure.
FIG. 1b is a schematic view of a broadcast message distribution process in the related art.
FIG. 1c is a schematic view of a broadcast message distribution process provided by one embodiment of the present disclosure.
FIG. 2 is a flow chart of a broadcast transmission method provided by another embodiment of the present disclosure.
FIG. 3 is a structural block diagram of a broadcast transmission device provided by one embodiment of the present disclosure.
FIG. 4 is a structural schematic view of a terminal provided by one embodiment of the present disclosure.

### DETAILED DESCRIPTION

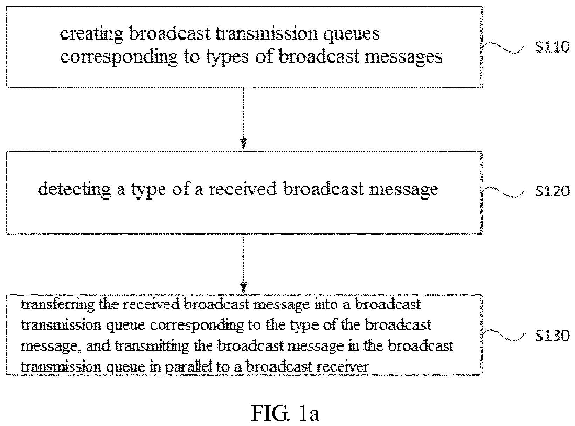

The present disclosure will be further described in detail below with reference to the accompanying drawings and embodiments. It can be understood that the specific embodiments described here are merely intended to illustrate the present disclosure but not to limit the present disclosure. FIG. 1a is a flow chart of a broadcast transmission method provided by one embodiment of the present disclosure. The method is implemented by a broadcast transmission device, the device is implemented by software and/or hardware, and the device is configured in a terminal such as a mobile phone. As shown in FIG. 1a, a technical solution provided by one embodiment of the present disclosure comprises steps S110, S120, and S130.

In S110, broadcast transmission queues corresponding to types of broadcast messages are created.

In one embodiment of the present disclosure, during a broadcast processing process, a service process of a broadcast transmitter transmits a broadcast message to a broadcast management module (for example, Activity Manager Service) by calling a broadcast transmission function (for example, a send Broadcast function); after receiving the broadcast message, the broadcast management module adds it into a broadcast transmission queue, and the broadcast management module transmits the broadcast message in the broadcast transmission queue to a broadcast receiver meeting receiving conditions through a process communication mechanism (for example, Binder process communication mechanism).

In a broadcast mechanism, broadcast messages refer to information transmitted during an operation process by a system or an application and used for transmission between the system and/or the application. Broadcast messages includes system associated broadcast messages and third party application broadcast messages, wherein, the system associated broadcast messages include system broadcast messages and system built-in application broadcast messages. The system broadcast messages may be system start broadcast messages, screen extinguishing broadcast messages, screen lighting broadcast message, or the like. The system built-in application broadcast messages may be short message broadcast messages or the like.

Before creating the broadcast transmission queues, the types of broadcast messages in a terminal can be divided; according to the divided types of broadcast messages, broadcast transmission queues corresponding to the types of the broadcast messages are created. When the broadcast messages include the system associated broadcast messages and the third party application broadcast messages, and the system associated broadcast messages include the system broadcast messages and system built-in application broadcast messages, alternatively, creating broadcast transmission queues corresponding to types of broadcast messages includes: creating a first broadcast transmission queue corresponding to the system associated broadcast messages, and creating a second broadcast transmission queue corresponding to the third party application broadcast messages. Wherein, broadcast messages in the first broadcast transmission queue and in the second broadcast transmission queue can be transmitted in parallel and at the same time.

In S 120, types of received broadcast messages are detected.

In one embodiment of the present disclosure, types of a broadcast message received by the broadcast management module are detected, wherein the broadcast messages received by the broadcast management module are broadcast messages transmitted by broadcast transmitters, wherein, the broadcast transmitters can include systems, system built-in applications, or third party applications. Wherein, the received broadcast messages include the system associated broadcast messages and the third party application broadcast messages; wherein, the system associated broadcast messages include the system broadcast messages and system built-in application broadcast messages.

In S130, the received broadcast messages are transferred into broadcast transmission queues corresponding to types of the broadcast messages, and thus the broadcast messages in the broadcast transmission queue are transmitted in parallel to the broadcast receiver.

In one embodiment of the present disclosure, each type of the broadcast messages corresponds to one broadcast transmission queue. When creating the first broadcast transmission queue corresponding to the system associated broadcast messages, and creating the second broadcast transmission queue corresponding to the third party application broadcast messages, alternatively, transferring the received broadcast messages into broadcast transmission queues corresponding to types of the broadcast messages, and thereby transmitting the broadcast messages in parallel to the broadcast receiver include: transferring received system associated broadcast messages into the first broadcast transmission queue, and transferring the received third party application broadcast messages into the second broadcast transmission queue, and thereby transmitting the system associated broadcast messages and the third party application broadcast messages in parallel to the broadcast receiver.

In the related art, a broadcast management module receives broadcast messages transmitted by broadcast transmitters, and adds the received broadcast messages into a broadcast transmission queue for distribution; broadcast messages entering the queue early can be distributed early, and broadcast messages entering the queue lately are distributed lately. When the broadcast messages transmitted by the broadcast transmitters are many, the broadcast transmission queue will be long; if the speed of distributing the broadcast messages is less than the speed of adding the broadcast messages into the broadcast transmission queue, serious blocking will be caused, and the transmission of the broadcast messages will be unsmooth. In one embodiment of the present disclosure, the broadcast transmission queues corresponding to the types of the broadcast messages are created, the broadcast messages received by the broadcast management module are transferred into corresponding broadcast transmission queues, and thus the broadcast messages are transmitted in parallel to the broadcast receivers; compared with the related art, the broadcast transmission queues are added, the speed of distributing broadcast messages is improved, and the blocking problem is solved. Since the speed of distributing broadcast messages is improved, the speed of processing broadcast messages is also improved.

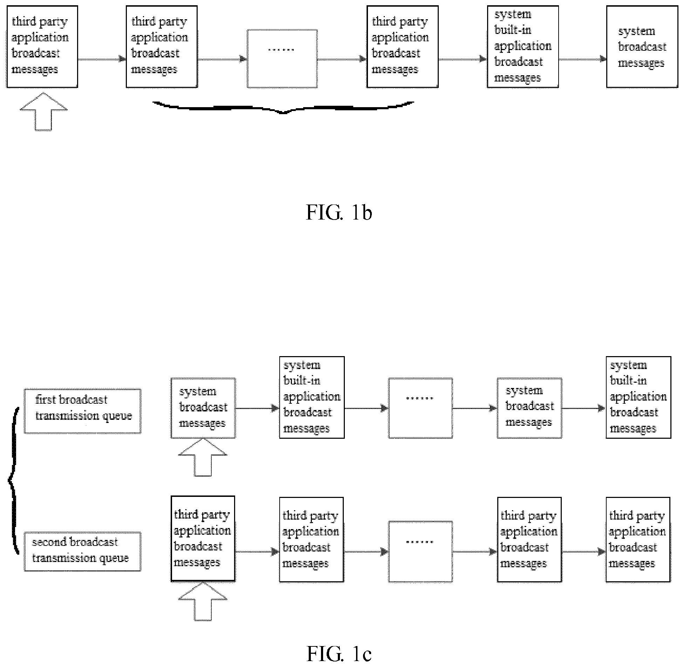

Moreover, in the related art, system broadcast messages, system built-in application broadcast messages, and third party application broadcast messages are in the same broadcast transmission queue for distribution. FIG. 1b is a schematic view of a broadcast message distribution process in the related art. As shown in FIG. 1b, double arrows point to currently distributed broadcast messages; in FIG. 1b, system broadcast messages, system built-in application broadcast messages, and third party application broadcast messages are in the same broadcast transmission queue, the number of the third party application broadcast messages is more, and in prior to the system broadcast messages and the system built-in application broadcast messages, distribution of the third party application broadcast messages requires to be completed, and thus the system broadcast messages and the system built-in application broadcast messages can be distributed. Compared with the third party application broadcast messages, the system broadcast messages or the system built-in application broadcast messages are more important; since the number of the third party application broadcast messages is more, distribution of the system broadcast messages or of the system built-in application broadcast messages is often affected, thereby resulting in that the system broadcast messages or the system built-in application broadcast messages are blocked by the third party application broadcast messages and cannot be processed quickly. For example, a third party application is installed in a terminal, because of the own requirements of the third party application, it may transmit broadcast messages frequently, and thus there may be many third party application broadcast messages in the broadcast transmission queue. When it is required to execute screen extinguishing for the terminal, triggering the screen extinguishing operation needs to transmit a screen extinguishing broadcast message, and process the screen extinguishing broadcast message for implementation. In the broadcast transmission queue, since there are many third party applications prior to the screen extinguishing broadcast message, the screen extinguishing broadcast message may be blocked by third party application broadcast messages, distribution of the screen extinguishing broadcast message may be affected, and processing for the screen extinguishing broadcast message may be affected, such that the screen extinguishing speed of the terminal is slow.

In one embodiment of the present disclosure, by transferring the received system broadcast messages and system built-in application broadcast messages into the created first broadcast transmission queue, and transferring the third party application broadcast messages into the second broadcast transmission queue, transmission in parallel is implemented. For example, as shown in FIG. 1c, the double arrows are currently distributed broadcast messages; it can be known from FIG. 1c that the broadcast messages in the first broadcast transmission queue and the broadcast messages in the second broadcast transmission queue can be distributed at the same time, that is, the system associated broadcast messages and the third party application broadcast messages are transmitted in parallel; wherein, the system associated broadcast messages include system broadcast messages and system built-in application broadcast messages. The problem that the system broadcast messages or system built-in application broadcast messages are blocked by the third party application broadcast messages is avoided.

On the basis of the above embodiments, when the broadcast messages include the system associated broadcast messages and the third party application broadcast messages, and the system associated broadcast messages include the system broadcast messages and the system built-in application broadcast messages, creating the broadcast transmission queues corresponding to the types of the broadcast messages can further includes: creating a first broadcast transmission queue corresponding to the system broadcast messages, creating a second broadcast transmission queue corresponding to the system built-in application broadcast messages, and creating a third broadcast transmission queue corresponding to the third party application broadcast messages. Correspondingly, transferring the received broadcast messages into broadcast transmission queues corresponding to types of the broadcast messages, and thereby transmitting the broadcast messages in parallel to the broadcast receiver can further includes: transferring received system broadcast messages into the first broadcast transmission queue, transferring received system built-in application broadcast messages into the second broadcast transmission queue, and transferring received third party application broadcast messages into the third broadcast transmission queue, thereby transmitting the system broadcast messages, the system built-in application broadcast messages, and the third party application broadcast messages in parallel to the broadcast receiver.

It should be noted that, the method for creating the broadcast transmission queues corresponding to the types of the broadcast messages is not limited to the foregoing method, and the types of the broadcast messages may be refined to create four or other numbers of broadcast transmission queues. The number of the created broadcast transmission queues can also be not limited, and the creation can be performed as needed. With respect to any two or more broadcast messages which are to be transmitted, as long as these broadcast messages are transferred into different broadcast transmission queues respectively, these broadcast messages can be transmitted in parallel to the broadcast receiver so as to improve the efficiency of transmitting broadcast messages. In the embodiments of the present disclosure, as long as a plurality of (i.e., at least two) broadcast transmission queues corresponding to different types of broadcast messages respectively have been created, and there are a plurality of (i.e., at least two) to be transmitted broadcast messages of different types, these to be transmitted broadcast messages can be respectively transferred into different broadcast transmission queues (i.e., broadcast transmission queues corresponding to the types of these broadcast messages respectively) and transmitted in parallel to the broadcast receiver. Alternatively, the method of dividing the broadcast message types may be different, for example, the broadcast messages can include application broadcast messages and system broadcast messages, the created broadcast transmission queues correspond to the types of the broadcast messages, and the received broadcast messages are transferred into broadcast transmission queues corresponding to the types of the broadcast messages. Wherein, the method for dividing the types of the broadcast messages can also be other methods; correspondingly, the created broadcast transmission queues correspond to the types of the broadcast messages.

It should be noted that, one embodiment of the present disclosure exemplarily executes S110 before S120, but one embodiment of the present disclosure is merely an example; in other embodiments of the present disclosure, S110 can also be executed after S120, and does not generate effect on broadcast transmission.

In one embodiment of the present disclosure, by transferring the received broadcast messages into the broadcast transmission queue corresponding to the types of the broadcast messages and thereby transmitting the broadcast messages in parallel to the broadcast receiver, the speed of distributing the broadcast messages can be improved, and the blocking problem caused by broadcast can be solved.

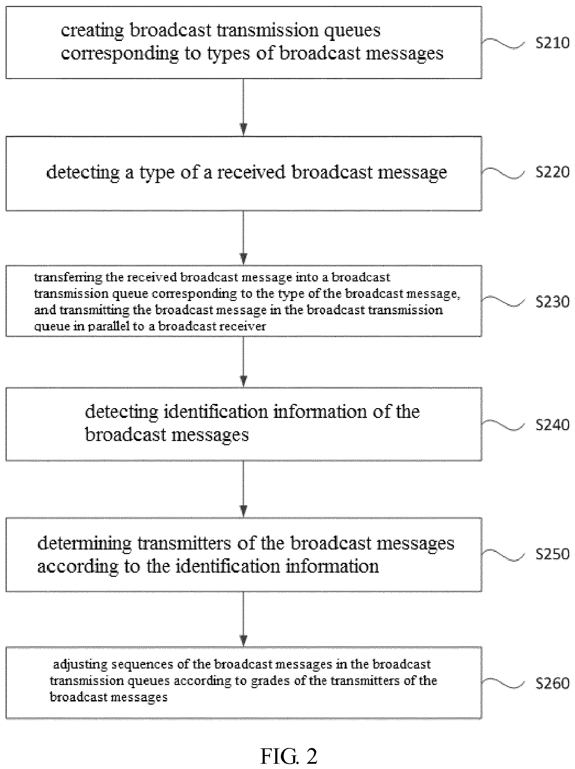

FIG. 2 is a flow chart of a broadcast transmission method provided by an embodiment of the present disclosure. As shown in FIG. 2, the technical scheme provided by one embodiment of the present disclosure includes a step S210, a step S220, a step S230, a step S240, a step S250, and a step S260.

In S210, broadcast transmission queues corresponding to types of broadcast messages are created.

In S220, types of received broadcast messages are detected.

In S230, the received broadcast messages are transferred into broadcast transmission queues corresponding to types of the broadcast messages, and thus the broadcast messages in the broadcast transmission queue are transmitted in parallel to the broadcast receiver.

In S240, identification information of the broadcast messages is detected.

In one embodiment of the present disclosure, the identification information of the system built-in application broadcast messages and of the third party application broadcast messages can be package names of applications, or can also be other identification information. The identification information of the system broadcast messages can be identification information corresponding to functions of the broadcast messages, and can also be identification information in other forms. Wherein, each broadcast message has identification information.

In S250, transmitters of the broadcast messages are determined according to the identification information.

In one embodiment of the present disclosure, according to the identification information of a broadcast message, the transmitter of the broadcast message can be determined. For example, if the identification information of a broadcast message is a package name of Wechat, the transmitter of the broadcast message is Wechat application. Wherein, the transmitters of the broadcast messages can be systems, system built-in applications, or third party applications; a transmitter of a broadcast message is the broadcast transmitter corresponding to the broadcast message.

In S260, according to grades of the transmitters of the broadcast messages, the sequences of the broadcast messages in the broadcast transmission queues are adjusted.

Wherein, the grades of the transmitters of the broadcast messages can be set. For example, system settings can be set as higher grades, and system built-in applications can be set as lower grades; in a broadcast transmission queue where both the system broadcast messages and the system built-in application broadcast messages are located, the system broadcast messages are adjusted to be before the system built-on application broadcast messages. Since there are many kinds of system built-in applications and third party application, grades of various system built-in applications and of various three party applications can also be set, such that various system built-in application broadcast messages are adjusted, and system built-in application broadcast messages of which the transmitters are in higher grades are adjusted to be before system built-in application broadcast messages of which the transmitters are in lower grades. In another broadcast transmission queue, third party application broadcast messages of which the transmitters are in higher grades are adjusted to be before third party application broadcast messages of which the transmitters are in lower grades.

Alternatively, it is also possible to adjust only respective sequences of the system built-in application broadcast messages and of the third party application broadcast messages in the broadcast transmission queues, and the adjusting method is according to the grades of the transmitters of the broadcast messages. The grades of the transmitters of the broadcast messages can be set through functional options in terminal interfaces, these functional options are configured to select the grades of the transmitters of the broadcast messages. Wherein, the functional options can be a plurality of options set in drop down menus of each application respectively, and can also be one option set in a terminal interface singly.

Therefore, when adjusting the respective sequences of the system built-in application broadcast messages and of the third party application broadcast messages in the broadcast transmission queues, before adjusting the sequences of the broadcast messages in the broadcast transmission queues according to grades of the transmitters of the broadcast messages, setting a functional option for selecting the grades of the transmitters of the broadcast messages is further included. Wherein, correspondingly, the transmitters of the broadcast messages include system built-in applications and third party applications.

Accordingly, by the grades of the transmitters of the broadcast messages, the sequences of the broadcast messages in the broadcast transmission queues are adjusted. The sequences of distributing the broadcast messages can be controlled, and the management efficiency of distributing the broadcast messages can be improved.

It should be noted that, one embodiment of the present disclosure exemplarily executes S240-S250 after S230; however, in other embodiments of the present disclosure, S2240-S250 can also be executed before S230, and the sequences of other steps can also be adjusted.

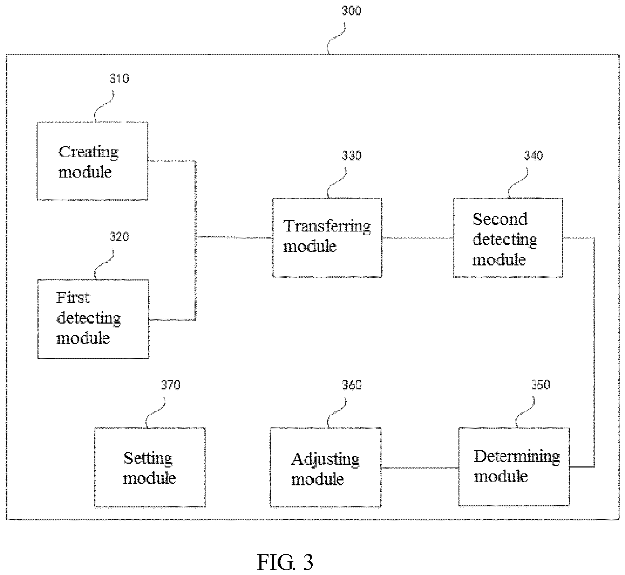

FIG. 3 is a structural block diagram of a broadcast transmission device provided by an embodiment of the present disclosure. The broadcast transmission device 300 is configured to execute a broadcast transmission method, and comprises: a creating module 310, a first detecting module 320, and a transferring module 330.

Wherein, the creating module 310 is configured to create broadcast transmission queues corresponding to types of broadcast messages; the first detecting module 320 is configured to detect a type of a received broadcast message; the transferring module 330 is configured to transfer the received broadcast message into a broadcast transmission queue corresponding to the type of the broadcast message, and transmit the broadcast message in the broadcast transmission queue in parallel to a broadcast receiver.

In one embodiment of the present disclosure, the broadcast messages include system associated broadcast messages and third party application broadcast messages, wherein, the system associated broadcast messages includes system broadcast messages and system built-in application broadcast messages; the creating module 310 is configured to create a first broadcast transmission queue corresponding to the system associated broadcast messages, and create a second broadcast transmission queue corresponding to the third party application broadcast messages; the transferring module 330 is configured to transfer received system associated broadcast messages into the first broadcast transmission queue, and transfer received third party application broadcast messages into the second broadcast transmission queue, and transmit the system associated broadcast messages and the third party application broadcast messages in parallel to the broadcast receiver.

In one embodiment of the present disclosure, the device further comprises: a second detecting module 340 configured to detect identification information of the broadcast messages; a determining module 350 configured to determine transmitters of the broadcast messages according to the identification information; and an adjusting module 360 configured to adjust the sequences of the broadcast messages in the broadcast transmission queues according to grades of the transmitters of the broadcast messages.

In one embodiment of the present disclosure, the device further comprises: a setting module 370 configured to set functional options for selecting the grades of the transmitters of the broadcast messages, wherein, the transmitters of the broadcast messages include system built-in applications and third party applications.

It should be noted that the connection relations of the functional modules in the embodiments of the present disclosure are not limited to the connection relation in FIG. 3. The connection relations of the functional modules can also be in other manners.

The broadcast transmission device provided by one embodiment of the present disclosure transfers the received broadcast messages into the broadcast transmission queues corresponding to the types of the broadcast messages, and thus transmits the broadcast messages in parallel to the broadcast receiver. The speed of distributing the broadcast messages can be improved, and the blocking problem caused by broadcast can be solved.

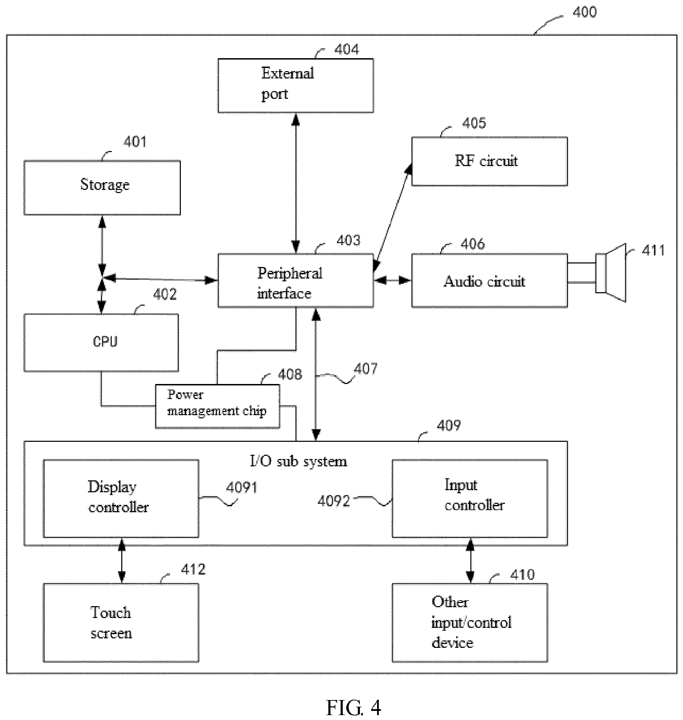

An embodiment of the present disclosure provides a terminal, the broadcast transmission device provided by an embodiment of the present disclosure can be integrated in the terminal. FIG. 4 is a structural schematic view of a terminal provided by an embodiment of the present disclosure. As shown in FIG. 4, the terminal 400 can comprises: a storage 401, a central processing unit (CPU) 402 (also called processor, hereinafter referred to as CPU), a touch screen 412, and a computer program which is stored in the storage and can be executed in the CPU. The touch screen 412 is configured to convert users' operations into electric signals to be input to the CPU, and display visible output signals; the CPU 402 implements the following operations when executing the computer program: creating broadcast transmission queues corresponding to types of broadcast messages; detecting a type of a received broadcast message; and transferring the received broadcast message into a broadcast transmission queue corresponding to the type of the broadcast message, and transmitting the broadcast message in the broadcast transmission queue in parallel to a broadcast receiver.

The terminal 400 further comprises: a peripheral interface 403, an RF (radio frequency) circuit 405, an audio circuit 406, a speaker 411, a power management chip 408, an input/output (I/O) sub system 309, other input/control equipment 410, and an external port 404, these parts communicate through one or more communication bus(es) or signal line(s) 407.

It should be noted that, the terminal 400 shown in the drawings is merely one example of the terminal, and the terminal 400 can have more or less parts than the parts shown in the drawings, can combine two or more parts, or can have different part configurations. The various parts shown in the drawings can be implemented in combinations of hardware, software, or both hardware and software including one or more signal processing and/or special integrated circuit therein.

A terminal with a broadcast transmission device integrated therein provided by one embodiment of the present disclosure is described in detail below. The terminal takes a mobile phone as an example.

The storage 401. The storage 401 can be accessed by the CPU 402, the external interface 403, etc. The storage 401 can include high-speed random access memory, and can also include non-volatile memory, such as one or more disk memory devices, flash memory devices, or other non-volatile solid-state memory devices.

The peripheral interface 403. The peripheral interface 403 can connect input and output peripheral equipments of a device to the CPU 402 and the storage 401.

The I/O sub system 409. The I/O sub system 409 can connect input and output peripheral equipments of a device, such as the touch screen 412 and the other input/control equipment 410, to the peripheral interface 403. The I/O sub system 409 can include a display controller 4091 and one or more input controller 4092 configured to control the other input/control equipment 410. Wherein, the one or more input controller 4092 receives electric signals from the other input/control equipment 410 or sends electric signal to the other input/control equipment 410. The other input/control equipment 410 can include physical buttons (press buttons, rocker buttons, etc.), dials, slide switches, joysticks, click wheels, etc. It should be noted that the input controller 4092 can be connected with any one of the following: a keypad, an infrared port, a USB interface, and an indication device such as a mouse.

The touch screen 412. The touch screen 412 is the input interface and the output interface between a user terminal and users, which displays visible output to users. The visible output can include graphics, texts, icons, videos, etc.

The display controller 4091 in the I/O sub system 409 receives electric signals from the touch screen 412 or sends electric signals to the touch screen 412. The touch screen 412 detects touches on the touch screen, the display controller 4091 converts the detected touches into interaction with user interface objects displayed on the touch screen 412, that is, implements human-computer interaction. The user interface objects displayed on the touch screen 412 can be icons for running games, icons for networking to corresponding networks, etc. It should be noted that the device can further include an optical mouse, the optical mouse is a touch-sensitive surface that does not display visible output, or is an extension of a touch-sensitive surface formed by the touch screen.

The RF circuit 405 is mainly configured to establish communication between a mobile phone and a wireless network (i.e., the network side), and implement data reception and transmission between the mobile phone and the wireless network, such as receiving and sending short messages, E-mails, etc. In particular, the RF circuit 405 receives and transmits RF signals, the RF signals are also called electromagnetic signals, the RF circuit 405 converts electric signals into electromagnetic signals or converts electromagnetic signals into electric signals, and communicates with a communication network and other devices through the electromagnetic signals. The RF circuit 405 can include known circuits configured to execute these functions, which include but are not limited to an antenna system, an RF transceiver, one or more amplifier, a tuner, one or more oscillator, a digital signal processor, a CODEC (Coder-DECoder) chip group, a subscriber identity module (SIM), and so on.

The audio circuit 406 is mainly configured to receive audio data from the peripheral interface 403, convert the audio data into electric signals, and transmit the electric signals to the speaker 411.

The speaker 411 is configured to restore the voice signals received from the wireless network through the RF circuit 405 by the mobile phone into sounds and play the sounds to users.

The power management chip 408 is configured to implement power supply and power management for the CPU 402, the I/O sub system, and hardware connected with the peripheral interface.

The terminal provided by one embodiment of the present disclosure is configured to execute the broadcast transmission methods described in the above embodiments, the technical principles and generated technical effect are similar, and are not repeated here.

One embodiment of the present disclosure provides a computer readable storage medium, the computer readable storage medium stores one or more program, the one or more program can be executed by one or more processor to implement any kind of broadcast transmission method of the aforementioned embodiments, and therefore can also implement corresponding technical effects. The forgoing has already described in detail and do not repeat here.

It should be noted that the terms "comprise", "contain", or any other variants thereof in the present disclosure are intended to encompass any non-exclusive inclusion, such that processes, methods, articles, or devices comprising a series of elements include not only those elements but also other elements that are not explicitly listed, or further include elements that are inherent to these processes, methods, articles, or devices. In case that there is not more restriction, an element that is defined by the phrase "comprising a ..." does not exclude the presence of additional equivalent elements in a process, method, article, or device that comprises the element.

Through the description of the above embodiments, those skilled in the art can clearly understand that the methods of the above embodiments can be implemented by means of software and a necessary general hardware platform, and of course, can also be implemented by hardware. Based on such understanding, the technical solutions of the present disclosure, in essence or in terms of contributing to related technologies, can be embodied in the form of a software product. The computer software product is stored in a storage medium (such as ROM/RAM, disk, CD), and includes a number of instructions for enabling a terminal device (which may be a cell phone, computer, server, air conditioner, or network device, etc.) to perform the methods described in each embodiment of the present disclosure.

After reading and understanding the drawings and the detailed description, other aspects can be understood.

Embodiments of the present disclosure add broadcast transmission queues, which can improve the distribution speed and the processing speed of the broadcast messages, and solve the blocking problem that may occur when broadcast is distributed.

## Claims

1. A broadcast transmission method for broadcast communication in a wireless terminal (400), comprising:
creating (S110, S210) a plurality of broadcast transmission queues corresponding to types of a plurality of broadcast messages;
detecting (S120, S220) a type of a received broadcast message;
transferring (S130, S230) the received broadcast message into one of the plurality of broadcast transmission queues corresponding to the type of the broadcast message, and transmitting the broadcast message in said one broadcast transmission queue, in parallel to the other queues of the plurality of broadcast transmission queues, to a broadcast receiver;
**characterized in that** the method further comprises:
detecting (S240) identification information of the plurality of broadcast messages;
determining (S250) transmitters of the plurality of broadcast messages according to the identification information; and
adjusting (S260) sequences of the plurality of broadcast messages in the plurality of broadcast transmission queues according to set grades of the transmitters of the plurality of broadcast messages; wherein, the transmitters of the plurality of broadcast messages include system settings, system built-in applications, and third party applications, and grades of the system settings are higher than grades of the system built-in applications.

2. The method according to claim 1, wherein, the creating (S110, S210) includes:
creating at least two broadcast transmission queues corresponding to at least two types of broadcast messages respectively.

3. The method according to claim 2, wherein, detecting (S120, S220) the type of the received broadcast message includes:
detecting at least two types of received broadcast messages; and
wherein the transferring (S130, S230) and the transmitting includes:
transferring the at least two types of received broadcast messages into at least two of the broadcast transmission queues corresponding to the at least two types of received broadcast messages respectively, and transmitting the at least two types of received broadcast messages in parallel to the broadcast receiver.

4. The method according to any one of claims 1-3, wherein, the plurality of broadcast messages include system associated broadcast messages and third party application broadcast messages;
the creating (S110, S210) includes:
creating one broadcast transmission queue corresponding to the system associated broadcast messages, and creating another broadcast transmission queue corresponding to the third party application broadcast messages;
the transferring (S130, S230) and the transmitting includes:
transferring received system associated broadcast messages and received third party application broadcast messages into their corresponding broadcast transmission queues respectively, and transmitting the system associated broadcast messages and the third party application broadcast messages in their corresponding broadcast transmission queues in parallel to the broadcast receiver.

5. The method according to claim 4, wherein, the system associated broadcast messages include system broadcast messages and system built-in application broadcast messages.

6. The method according to claim 5, wherein, the creating (S110, S120) further includes:
creating two broadcast transmission queues corresponding to the system broadcast messages and the system built-in application broadcast messages respectively; and
wherein the transferring (S130, S230) and the transmitting further includes:
transferring received system broadcast messages and received system built-in application broadcast messages into their corresponding broadcast transmission queues respectively, and transmitting the received system broadcast messages and the received system built-in application broadcast messages in their corresponding broadcast transmission queues in parallel to the broadcast receiver.

7. The method according to any one of claims 1-6, wherein, the plurality of broadcast messages include system associated broadcast messages and third party application broadcast messages, and the system associated broadcast messages include system broadcast messages and system built-in application broadcast messages; the identification information of the system built-in application broadcast messages and of the third party application broadcast messages are package names of applications, and the identification information of the system broadcast messages is identification information corresponding to functions of the system broadcast messages.

8. The method according to claim 7, further comprising:
setting a functional option for selecting the grades of the transmitters of the plurality of broadcast messages.

9. A terminal (400) comprising a storage (401), a processor (402), and a computer program stored in the storage and being executable in the processor (402); wherein, the processor implements the following operations when executing the computer program:
creating (S110, S210) a plurality of broadcast transmission queues corresponding to types of a plurality of broadcast messages;
detecting (S120, S220) a type of a received broadcast message;
transferring (S130, S230) the received broadcast message into one of the plurality of broadcast transmission queues corresponding to the type of the broadcast message, and transmitting the broadcast message in said one broadcast transmission queue, in parallel to the other queues of the plurality of broadcast transmission queues, to a broadcast receiver;
**characterized in that** the processor further implements following operations when executing the computer program:
detecting (S240) identification information of the plurality of broadcast messages;
determining (S250) transmitters of the plurality of broadcast messages according to the identification information; and
adjusting (S260) sequences of the plurality of broadcast messages in the plurality of broadcast transmission queues according to set grades of the transmitters of the plurality of broadcast messages; wherein, the transmitters of the plurality of broadcast messages include system settings, system built-in applications, and third party applications, and grades of the system settings are higher than grades of the system built-in applications.

10. The terminal (400) according to claim 9, further comprising a touch screen (412) configured to convert operations of a user into electric signals to be input to the processor (402) and display visible output signals.

11. The terminal (400) according to claim 10, further comprising an input/output (I/O) sub system (409); wherein, the I/O sub system (409) includes a display controller (4091) configured to receive electric signals from the touch screen (412) or send electric signals to the touch screen (412).

12. The terminal (400) according to claim 11, wherein, the touch screen (412) is configured to detect touches on the touch screen (412), and the display controller (409) is configured to convert the touches detected by the touch screen (412) into interaction with user interface objects displayed on the touch screen (412).

13. The terminal (400) according to claim 11 or claim 12, further comprising other input/control equipment (410); wherein, the I/O sub system (409) further includes one or more input controller (4092) configured to control the other input/control equipment (410).

14. The terminal (400) according to claim 13, further comprising a peripheral interface (403) configured to connect input and output peripheral equipments to the processor (402) and the storage (401); wherein, the I/O sub system (409) connects the touch screen (412) and the other input/control equipment (410) to the peripheral interface (403).

## Patentansprüche

1. Rundsendungsübertragungsverfahren für Rundsendungskommunikation in einem drahtlosen Endgerät (400), Folgendes umfassend:
Erstellen (S110, S210) mehrerer Rundsendungsübertragungswarteschlangen, die Arten von mehreren Rundsendungsnachrichten entsprechen;
Detektieren (S120, S220) einer Art einer empfangenen Rundsendungsnachricht;
Überführen (S130, S230) der empfangenen Rundsendungsnachricht in eine der mehreren Rundsendungsübertragungswarteschlangen, die der Art der Rundsendungsnachricht entspricht, und Übertragen der Rundsendungsnachricht in der einen Rundsendungsübertragungswarteschlange parallel zu den anderen Warteschlangen der mehreren Rundsendungsübertragungswarteschlangen an einen Rundsendungsempfänger;
**dadurch gekennzeichnet, dass** das Verfahren ferner Folgendes umfasst:
Detektieren (S240) von Identifikationsinformationen der mehreren Rundsendungsnachrichten;
Bestimmen (S250) von Sendern der mehreren Rundsendungsnachrichten gemäß den Identifikationsinformationen; und
Anpassen (S260) von Abfolgen der mehreren Rundsendungsnachrichten in den mehreren Rundsendungsübertragungswarteschlangen gemäß eingestellten Graden der Sender der mehreren Rundsendungsnachrichten; wobei die Sender der mehreren Rundsendungsnachrichten Systemeinstellungen, systemeingebaute Anwendungen und Drittparteianwendungen beinhalten, und Grade der Systemeinstellungen höher als Grade der systemeingebauten Anwendungen sind.

2. Verfahren nach Anspruch 1, wobei das Erstellen (S110, S210) Folgendes beinhaltet:
Erstellen von mindestens zwei Rundsendungsübertragungswarteschlangen, die jeweils mindestens zwei Arten von Rundsendungsnachrichten entsprechen.

3. Verfahren nach Anspruch 2, wobei Detektieren (S120, S220) der Art der empfangenen Rundsendungsnachricht Folgendes beinhaltet:
Detektieren von mindestens zwei Arten von empfangenen Rundsendungsnachrichten; und
wobei das Überführen (S130, S230) und das Übertragen Folgendes beinhalten:
Überführen der mindestens zwei Arten von empfangenen Rundsendungsnachrichten in mindestens zwei der Rundsendungsübertragungswarteschlangen, die jeweils den mindestens zwei Arten von empfangenen Rundsendungsnachrichten entsprechen, und paralleles Übertragen der mindestens zwei Arten von empfangenen Rundsendungsnachrichten an den Rundsendungsempfänger.

4. Verfahren nach einem der Ansprüche 1-3, wobei die mehreren Rundsendungsnachrichten systemassoziierte Rundsendungsnachrichten und Drittparteianwendung-Rundsendungsnachrichten beinhalten;
wobei das Erstellen (S110, S210) Folgendes beinhaltet:
Erstellen einer Rundsendungsübertragungswarteschlange, die den systemassoziierten Rundsendungsnachrichten entspricht, und Erstellen einer anderen Rundsendungsübertragungswarteschlange, die den Drittparteianwendung-Rundsendungsnachrichten entspricht;
wobei das Überführen (S130, S230) und das Übertragen Folgendes beinhalten:
Überführen empfangener systemassoziierter Rundsendungsnachrichten und empfangener Drittparteianwendung-Rundsendungsnachrichten in jeweils deren entsprechende Rundsendungsübertragungswarteschlangen und paralleles Übertragen der systemassoziierten Rundsendungsnachrichten und der Drittparteianwendung-Rundsendungsnachrichten in deren entsprechenden Rundsendungsübertragungswarteschlangen an den Rundsendungsempfänger.

5. Verfahren nach Anspruch 4, wobei die systemassoziierten Rundsendungsnachrichten System-Rundsendungsnachrichten und Systemeingebaute-Anwendung-Rundsendungsnachrichten beinhalten.

6. Verfahren nach Anspruch 5, wobei das Erstellen (S110, S120) ferner Folgendes umfasst:
Erstellen von zwei Rundsendungsübertragungswarteschlangen, die jeweils den System-Rundsendungsnachrichten und den Systemeingebaute-Anwendung-Rundsendungsnachrichten entsprechen; und
wobei das Überführen (S130, S230) und das Übertragen ferner Folgendes beinhalten:
jeweiliges Überführen empfangener System-Rundsendungsnachrichten und empfangener Systemeingebaute-Anwendung-Rundsendungsnachrichten in deren entsprechende Rundsendungsübertragungswarteschlangen und paralleles Übertragen der empfangenen System-Rundsendungsnachrichten und der empfangenen Systemeingebaute-Anwendung-Rundsendungsnachrichten in deren entsprechenden Rundsendungsübertragungswarteschlangen an den Rundsendungsempfänger.

7. Verfahren nach einem der Ansprüche 1-6, wobei die mehreren Rundsendungsnachrichten systemassoziierte Rundsendungsnachrichten und Drittparteianwendung-Rundsendungsnachrichten beinhalten und die systemassoziierten Rundsendungsnachrichten System-Rundsendungsnachrichten und Systemeingebaute-Anwendung-Rundsendungsnachrichten beinhalten; wobei die Identifikationsinformationen der Systemeingebaute-Anwendung-Rundsendungsnachrichten und der Drittparteianwendung-Rundsendungsnachrichten Packungsnamen von Anwendungen sind, und die Identifikationsinformationen der System-Rundsendungsnachrichten Identifikationsinformationen sind, die Funktionen der System-Rundsendungsnachrichten entsprechen.

8. Verfahren nach Anspruch 7, ferner Folgendes umfassend:
Einstellen einer funktionalen Option zum Auswählen der Grade der Sender der mehreren Rundsendungsnachrichten.

9. Endgerät (400), das eine Ablage (401), einen Prozessor (402) und ein in der Ablage gespeichertes und in dem Prozessor (402) ausführbares Computerprogramm umfasst; wobei der Prozessor bei Ausführung des Computerprogramms die folgenden Operationen implementiert:
Erstellen (S110, S210) mehrerer Rundsendungsübertragungswarteschlangen, die Arten von mehreren Rundsendungsnachrichten entsprechen;
Detektieren (S120, S220) einer Art einer empfangenen Rundsendungsnachricht;
Überführen (S130, S230) der empfangenen Rundsendungsnachricht in eine der mehreren Rundsendungsübertragungswarteschlangen, die der Art der Rundsendungsnachricht entspricht, und Übertragen der Rundsendungsnachricht in der einen Rundsendungsübertragungswarteschlange parallel zu den anderen Warteschlangen der mehreren Rundsendungsübertragungswarteschlangen an einen Rundsendungsempfänger;
**dadurch gekennzeichnet, dass** der Prozessor beim Ausführen des Computerprogramms ferner die folgenden Operationen implementiert:
Detektieren (S240) von Identifikationsinformationen der mehreren Rundsendungsnachrichten;
Bestimmen (S250) von Sendern der mehreren Rundsendungsnachrichten gemäß den Identifikationsinformationen; und
Anpassen (S260) von Abfolgen der mehreren Rundsendungsnachrichten in den mehreren Rundsendungsübertragungswarteschlangen gemäß eingestellten Graden der Sender der mehreren Rundsendungsnachrichten; wobei die Sender der mehreren Rundsendungsnachrichten Systemeinstellungen, systemeingebaute Anwendungen und Drittparteianwendungen beinhalten, und Grade der Systemeinstellungen höher als Grade der systemeingebauten Anwendungen sind.

10. Endgerät (400) nach Anspruch 9, ferner umfassend einen Berührbildschirm (412), der ausgelegt ist zum Umsetzen von Operationen eines Benutzers in elektrische Signale, die in den Prozessor (402) eingegeben werden sollen, und zum Anzeigen sichtbarer Ausgabesignale.

11. Endgerät (400) nach Anspruch 10, ferner umfassend ein Eingabe/Ausgabe-Subsystem bzw. I/O-Subsystem (409); wobei das I/O-Subsystem (409) einen Anzeigecontroller (4091) beinhaltet, der ausgelegt ist zum Empfangen elektrischer Signale von dem Berührbildschirm (412) oder zum Senden elektrischer Signale an den Berührbildschirm (412).

12. Endgerät (400) nach Anspruch 11, wobei der Berührbildschirm (412) ausgelegt ist zum Detektieren von Berührungen auf dem Berührbildschirm (412) und der Anzeigecontroller (409) ausgelegt ist zum Umsetzen der durch den Berührbildschirm (412) detektierten Berührungen in Interaktion mit auf dem Berührbildschirm (412) angezeigten Benutzerschnittstellenobjekten.

13. Endgerät (400) nach Anspruch 11 oder Anspruch 12, ferner umfassend andere Eingabe/Steuerungs-Ausrüstung (410); wobei das I/O-Subsystem (409) ferner einen oder mehrere Eingabecontroller (4092) beinhaltet, die ausgelegt sind zum Steuern der anderen Eingabe/Steuerungs-Ausrüstung (410).

14. Endgerät (400) nach Anspruch 13, ferner umfassend eine Peripherieschnittstelle (403), die dafür ausgelegt ist, Eingabe- und Ausgabe-Peripherieausrüstung mit dem Prozessor (402) und der Ablage (401) zu verbinden; wobei das I/O-Subsystem (409) den Berührbildschirm (412) und die andere Eingabe/Steuerungs-Ausrüstung (410) mit der Peripherieschnittstelle (403) verbindet.

## Revendications

1. Procédé de transmission de diffusion pour la communication de diffusion dans un terminal sans fil (400), comprenant :
la création (S110, S210) d'une pluralité de files d'attente de transmission de diffusion correspondant à des types d'une pluralité de messages de diffusion ;
la détection (S120, S220) d'un type de message de diffusion reçu ;
le transfert (S130, S230) du message de diffusion reçu dans l'une de la pluralité de files d'attente de transmission de diffusion correspondant au type du message de diffusion, et la transmission du message de diffusion dans ladite file d'attente de transmission de diffusion, en parallèle avec les autres files d'attente de la pluralité de files d'attente de transmission de diffusion, à un récepteur de diffusion ;
**caractérisé en ce que** le procédé comprend en outre :
la détection (S240) d'informations d'identification de la pluralité de messages de diffusion ;
la détermination (S250) d'émetteurs de la pluralité de messages de diffusion en fonction des informations d'identification ; et
l'ajustement (S260) de séquences de la pluralité de messages de diffusion dans la pluralité de files d'attente de transmission de diffusion en fonction de niveaux définis des émetteurs de la pluralité de messages de diffusion ; les émetteurs de la pluralité de messages de diffusion comprenant des paramètres système, des applications intégrées au système et des applications tierces, et les niveaux des paramètres système étant supérieurs aux niveaux des applications intégrées au système.

2. Procédé selon la revendication 1, la création (S110, S210) comprenant :
la création d'au moins deux files d'attente de transmission de diffusion correspondant respectivement à au moins deux types de messages de diffusion.

3. Procédé selon la revendication 2, la détection (S120, S220) du type du message de diffusion reçu comprenant : la détection d'au moins deux types de messages de diffusion reçus ; et
le transfert (S130, S230) et la transmission comprenant :
le transfert des au moins deux types de messages de diffusion reçus dans au moins deux des files d'attente de transmission de diffusion correspondant respectivement aux au moins deux types de messages de diffusion reçus, et la transmission des au moins deux types de messages de diffusion reçus en parallèle vers le récepteur de diffusion.

4. Procédé selon l'une quelconque des revendications 1 à 3, la pluralité de messages de diffusion comprenant des messages de diffusion associés au système et des messages de diffusion d'application tierce ;
la création (S110, S210) comprenant :
la création d'une file d'attente de transmission de diffusion correspondant aux messages de diffusion associés au système, et la création d'une autre file d'attente de transmission de diffusion correspondant aux messages de diffusion d'application tierce ;
le transfert (S130, S230) et la transmission comprenant :
le transfert des messages de diffusion associés au système reçus et des messages de diffusion d'application tierce reçus respectivement dans leurs files d'attente de transmission de diffusion correspondantes, et la transmission des messages de diffusion associés au système et des messages de diffusion d'application tierce dans leurs files d'attente de transmission de diffusion correspondantes en parallèle au récepteur de diffusion.

5. Procédé selon la revendication 4, les messages de diffusion associés au système comprenant des messages de diffusion de système et des messages de diffusion d'application intégrée au système.

6. Procédé selon la revendication 5, la création (S110, S120) comprenant en outre :
la création de deux files d'attente de transmission de diffusion correspondant respectivement aux messages de diffusion de système et aux messages de diffusion d'application intégrée au système ; et
le transfert (S130, S230) et la transmission comprenant en outre :
le transfert de messages de diffusion de système reçus et de messages de diffusion d'application intégrée au système reçus respectivement dans leurs files d'attente de transmission de diffusion correspondantes, et la transmission des messages de diffusion de système reçus et des messages de diffusion d'application intégrée au système reçus dans leurs files d'attente de transmission de diffusion correspondantes en parallèle au récepteur de diffusion.

7. Procédé selon l'une quelconque des revendications 1 à 6, la pluralité de messages de diffusion comprenant des messages de diffusion associés au système et des messages de diffusion d'application tierce, et les messages de diffusion associés au système comprenant des messages de diffusion de système et des messages de diffusion d'application intégrée au système ; les informations d'identification des messages de diffusion d'application intégrée au système et des messages de diffusion d'application tierce étant des noms de paquet d'applications, et les informations d'identification des messages de diffusion de système étant des informations d'identification correspondant aux fonctions des messages de diffusion de système.

8. Procédé selon la revendication 7, comprenant en outre :
le paramétrage d'une option fonctionnelle pour la sélection des niveaux des émetteurs de la pluralité de messages de diffusion.

9. Terminal (400) comprenant une mémoire (401), un processeur (402) et un programme informatique stocké dans la mémoire et exécutable dans le processeur (402) ; le processeur mettant en œuvre les opérations suivantes lors de l'exécution du programme informatique :
la création (S110, S210) d'une pluralité de files d'attente de transmission de diffusion correspondant aux types d'une pluralité de messages de diffusion ;
la détection (S120, S220) d'un type de message de diffusion reçu ;
le transfert (S130, S230) du message de diffusion reçu dans l'une de la pluralité de files d'attente de transmission de diffusion correspondant au type du message de diffusion, et la transmission du message de diffusion dans ladite file d'attente de transmission de diffusion, en parallèle avec les autres files d'attente de la pluralité de files d'attente de transmission de diffusion, à un récepteur de diffusion ;
**caractérisé en ce que** le processeur met en œuvre en outre les opérations suivantes lors de l'exécution du programme informatique :
la détection (S240) d'informations d'identification de la pluralité de messages de diffusion ;
la détermination (S250) d'émetteurs de la pluralité de messages de diffusion en fonction des informations d'identification ; et
l'ajustement (S260) de séquences de la pluralité de messages de diffusion dans la pluralité de files d'attente de transmission de diffusion en fonction de niveaux définis des émetteurs de la pluralité de messages de diffusion ; les émetteurs de la pluralité de messages de diffusion comprenant des paramètres système, des applications intégrées au système et des applications tierces, et les niveaux des paramètres système étant supérieurs aux niveaux des applications intégrées au système.

10. Terminal (400) selon la revendication 9, comprenant en outre un écran tactile (412) configuré pour convertir les opérations d'un utilisateur en signaux électriques destinés à être entrés dans le processeur (402) et afficher des signaux de sortie visibles.

11. Terminal (400) selon la revendication 10, comprenant en outre un sous-système d'entrée/sortie (E/S) (409) ; le sous-système E/S (409) comprenant un dispositif de commande d'affichage (4091) configuré pour recevoir des signaux électriques en provenance de l'écran tactile (412) ou envoyer des signaux électriques à l'écran tactile (412).

12. Terminal (400) selon la revendication 11, l'écran tactile (412) étant configuré pour détecter des contacts tactiles sur l'écran tactile (412), et le dispositif de commande d'affichage (409) étant configuré pour convertir les contacts tactiles détectés par l'écran tactile (412) en interaction avec les objets d'interface utilisateur affichés sur l'écran tactile (412).

13. Terminal (400) selon la revendication 11 ou la revendication 12, comprenant en outre d'autres équipements d'entrée/de commande (410) ; le sous-système E/S (409) comprenant en outre un ou plusieurs dispositifs de commande d'entrée (4092) configurés pour commander les autres équipements d'entrée/de commande (410) .

14. Terminal (400) selon la revendication 13, comprenant en outre une interface périphérique (403) configurée pour connecter des équipements périphériques d'entrée et de sortie au processeur (402) et à la mémoire (401) ; le sous-système E/S (409) connectant l'écran tactile (412) et l'autre équipement d'entrée/de commande (410) à l'interface périphérique (403).
